Europäisches Patentamt

European Patent Office

Office européen des brevets

(11) Publication number: **0 474 936 A1**

# EUROPEAN PATENT APPLICATION

(21) Application number: **90310106.1**

(22) Date of filing: **14.09.90**

(51) Int. Cl.5: **C02F 1/46**

(43) Date of publication of application:
**18.03.92 Bulletin 92/12**

(84) Designated Contracting States:
**DE FR GB**

(71) Applicant: **THE STATE OF ISRAEL, ATOMIC ENERGY COMMISSION, NUCLEAR RESEARCH CENTER NEGEV**
**P O Box 9001**
**Beer-Sheva(IL)**

(72) Inventor: **Oren, Yoram**
**20 Vered St.**
**Beer Sheva 8400(IL)**
Inventor: **Soffer, Abraham**
**Moav St.**
**Arad 80700(IL)**
Inventor: **Gulob, Daniel**
**40 Tapuz St**
**Omer 84965(IL)**
Inventor: **Abda, Moshe**
**94 Derech Metar**
**Metar 85025(IL)**

(74) Representative: **Bizley, Richard Edward et al**
**HEPWORTH LAWRENCE BRYER & BIZLEY**
**2nd Floor Gate House South West Gate**
**Harlow, Essex CM20 1JN(GB)**

(54) Electrochemical process for purifying chromium-containing wastes.

(57) A method of purifying wastes containing chromium in both the hexavalent and trivalent states comprising passing the waste to be purified through an electrolytic cell, through the pores of a porous carbon electrode connected as the cathode, whereby the hexavalent chromium present in the waste is electrolytically reduced and subsequently or simultaneously precipitated as chromium or an insoluble chromium compound within the pores of the porous carbon electrode.

The present invention is concerned with an electrochemical process for purifying chromium-containing wastes. The invention is more particularly concerned with an electrochemical process for removing chromium from chromium-containing wastes in which the chromium is present at relatively low concentrations, and not containing considerable quantities of acids or alkali. The process is effective for removal of both tri- and hexavalent chromium. Almost complete removal of chromium is achieved by electrochemical means only.

Chromium has been shown, in recent years, to be highly toxic [Morris, B.W., et al., **Atomic Spectroscopy,** 6(6), 149 (1985); Anderson, R.A., et al., **J. Nutriation,** 113, 276 (1983)], particularly in its hexavalent state. As a result, its concentration in ground water was limited by environment protection authorities to 10 ppb [**International Standards for Drinking Water, 3rd Ed., WHO,** Geneva, 1971; **European Standards for Drinking Water, 2nd Ed., WHO** Regional Office for Europe, Copenhagen, 1970]. The major sources of chromium contamination of ground water are chromium-plating industries, disposed blowdown water from cooling towers (to which hexavalent chromium is added as an anti-corrosive agent) and timber treatment solutions which usually contain a mixture of chromate, arsenic and copper salts.

Throughout the years, several procedures have been suggested for the treatment of chromium-containing waste solutions in order to reduce the chromium concentration and meet the tough regulations which are nowadays more strictly enforced. Most of the purification methods employed are basically chemical processes, while prior art electrochemical methods of dealing with chromium-containing wastes are, in general, majorly concerned with the reduction of hexavalent chromium to trivalent chromium, on the assumption that since in the trivalent state chromium is less toxic than in its hexavalent state, wastes containing trivalent chromium may be discharged as are. Some of the prior art publications of electrochemical processes contemplate additional chemical steps for the removal of trivalent chromium from chromium-containing wastes.

Perhaps the most widely utilized process is the reduction of the chromate ion to trivalent chromium by reduction agents such as $SO_2$, $NaHSO_3$ or ferrous sulphate. In some processes, ferrous ions are formed by an electrochemical oxidation of iron anodes [Taylor, T.T., **Chem. Eng. Progr.,** 79, 70 (1982); Bronovolokov, P.P., et al., **Zh. Prikl. Khim. (Leningrad),** 51(8), 1863 (1978)]. The chromic ion is then precipitated in settling ponds as a hydroxide, by pH adjustment. In several versions of this procedure, settling is enhanced by the addition of flocculating polymers. In another version of this method, recently suggested by the Actimag Co. (Scottdale, Ariz.) [Bishop, J., **Chemical Week,** p. 14 February 11, 1987], a magnetic field is used to stabilize a suspension of iron particles as a reducing agent.

The removal of hexavalent chromium by non-electrochemical adsorption on activated carbon has been studied [Huang, C.P. and Wu M.H., **Water Research,** 11, 673 (1987)]. The process was found to proceed along two pathways: (1) removal of $Cr^{+6}$ through reduction to $Cr^{+3}$ on the carbon surface, which occurs at pH<6, and (2) removal by adsorption of the original $Cr^{+6}$, a process which exhibits maximal adsorption at pH 5-6.

The electrodeposition of chromium on reticulated vitreous carbon has also been studied [Agarwal, I.C. et al., **Water Research,** 18(2), 227 (1984)]. The extent of metal removal after 10 passes through a potentiostatically controlled, laboratory scale column was 51%, which is a rather poor efficiency, when considering use of this process on a large scale basis. No explanation was provided by the authors for this low efficiency, however, the result is not surprising in view of the complex electrochemical activity of chromium. Chromium can be electrodeposited from solutions either as a metal or as an insoluble ionic component (e.g. $Cr(OH)_3$). For both forms to take part, the composition of the solution and the electrochemical conditions have to be carefully adjusted. Possibly, some idea of the complexity of chromium electrochemistry can be grasped from studies on the chromium electroplating process which, after almost a century of industrial use, is still poorly understood.

It is well established that chromium metal can only be deposited from $Cr^{+6}$ solutions [**"Modern Electroplating"**, F.A. Lowenheim Ed., Chapman and Hall, London (1974)], probably by direct reduction to the metallic state [Ogburn, F. and Brenner, A., **J. Electrochem. Soc.,** 96, 347 (1949)]. Accordingly, it was shown that $Cr^{+3}$ is strongly hydrated and the attached water molecules prevent further reduction [Hant, J.P. and Taub, H., **J. Chem. Phys.,** 19, 602 (1951); 18, 757 (1950)]. Also the role of anions and pH in the reduction process is unknown. In fact, the presence of $SO_4^=$ ions in the plating bath is essential for satisfactory chromium plating [Hoare, J.P., **J. Electrochem. Soc.,** 126, 190 (1979); Nishimura, K., et al., **Metal Finishing,** March, 45 (1987); Lin-Cai, J. and Pletcher, D., **J. Appl. Electrochem.,** 13, 245 (1983)] and the concentration ratio of chromium to sulphate ions has to be carefully adjusted [Lin-Cai, ibid.] as well as the acid concentration [Nishimura, ibid.]. Other anions such as flouride and flourosilicate can replace the sulphate as catalyst [**Encyclopedia of Chemical Technology,** Kirk-Othmer Ed., p. 842]. However, the exact mechanism by which anions have a catalyzing role is yet obscure [Lin-Cai, ibid.].

The use of porous carbon electrodes for the reduction of hexavalent chromium has been disclosed. U.S. Patent No. 3,679,557 describes a process for reducing hexavalent chromium present in spent oxidizing solutions using a porous carbon anode and a noble metal cathode. This publication only deals with the reduction of chromate to the trivalent state. U.S. Patent No. 4,256,557 discloses a method of electrowinning copper and simultaneously reducing hexavalent chromium in spent chromate etching solutions by passing said spent solution through a series of porous carbon electrodes, connected alternatingly as cathodes and anodes, depositing the copper as metal and reducing the chromium at the cathode, with the evolution of oxygen at the anode. This publication also only deals with wastes of relatively high chromium content and is mainly aimed at the recovery of copper from the spent solutions. This patent expressedly states that trivalent chromium is non-toxic and contents itself, therefore, with the reduction of the chromium, without removing the same from the waste solution. In case removal or recovery of the chromium may be required, the publication mentions only the possibility of chemical precipitation and settling of the chromium as its hydroxide.

The present invention is primarily concerned with the total removal of chromium from dilute wastes, not containing appreciable excess of acid or alkali, but may also be applied to relatively highly acidic or basic wastes, such as spent etching solutions, after appropriate pre-treatment. The main sources of dilute, practically neutral chromium-containing wastes are discarded cooling water containing chromate-based corrosion inhibitors, and, possibly, water from cleaning chromate-treated products such as printed circuits and plated items. As will be shown hereafter, in accordance with the invention, the chromate content of the waste may be lowered to less than 10 ppb.

In order to more fully understand the methods of the present invention, some theoretical background may be desired. In an electrochemical cell (in the present invention comprising porous carbon electrodes), chromium may be reduced at the cathode according to two possible equations, one in the presence of hydrogen ions, that is under acidic conditions, the other under alkaline conditions.

The presence of hydrogen ions favours the reduction of hexavalent chromium according to the equation:

$$CrO_4{}^{-2} + 14H^+ + 6e \longrightarrow 2Cr^{+3} + 7H_2O \qquad (1)$$

However, the reduction is also possible, though much less likely, starting from a neutral solution, which becomes alkaline in the course of the reduction, by appropriately selecting the cathode potential, according to the equation:

$$CrO_4{}^{-2} + 4H_2O \longrightarrow Cr^{+3} + 8OH^- \qquad (2)$$

As the solution becomes alkaline, the trivalent chromium ions will be precipitated in the form of Cr(OH)$_3$ which remains immobilized in the pores of the porous carbon electrode.

In practice, the actual reaction may proceed somewhere between the above two schematic equations, either $CrO_4{}^{-2}$ will be reduced and precipitated as the hydroxide, while oxidizing hydrogen ions will go into water molecules, or, in case the solution does not become sufficiently alkaline to precipitate the chromium as its hydroxide, precipitation may be completed by passing the solution containing trivalent chromium ions through a further cathode, having a higher negative potential, rendering the solution more alkaline and completing precipitation.

In case, following electrolysis, the purified waste should become too alkaline to be discharged as such, a subsequent electrolytic neutraliztion step may be added, by passing the waste through the anode compartment of a cell, separated by a membrane into a cathode and an anode compartments.

In case the original waste water should not contain sufficient $H^+$ ions to enable cathodic reduction according to the equation (1), a preliminary acidification step according to equation:

$$H_2O \longrightarrow 2H^+ + 1/2O_2 + 2e \qquad (3)$$

should possibly be contemplated, which step may be carried out by passing the waste, as a first step, through the anode compartment of a cell divided by a diaphragm.

Referring to said acidification and neutralization steps, it should be borne in mind that in case said steps are performed in divided cells, the diaphragms separating the anode and cathode compartments should preferably be of an ion selective type, so that the current is mainly carried by ions other than the hydroxyl and chromate ions.

The present invention is mainly directed at two embodiments, the first embodiment employing a cell comprising parallel porous carbon electrodes, separated by only perforated spacer separators, preventing electric short-circuiting between the electrodes, but permitting free flow-through of the solution, the electrodes being alternatingly connected as anodes and cathodes and the solution flowing through the electrodes, parallel to the direction of the current.

According to the second embodiment, cells are divided by a diaphragm, preferably of an ion selective type, into anode and cathode compartments and the solution flows through said compartments through a porous carbon electrode, essentially occupying the entire volume of said compartments, normal to the direction of the current. The solution is passed either through the cathode compartment only, in which case a reference solution (which may be a side stream) is passed through the anode compartment, or through the anode and cathode compartments in series, first through an anode for acidification, then through a cathode for reduction, and if necessary, through a further cathode compartment for neutralization, as explained above.

It may be mentioned that there is a possibility that the precipitation steps may be followed by further reduction to metal, and metal electrodeposition, according to the equation: $Cr^{+3} + 3e \longrightarrow Cr$, however, also in this case the net result would be that chromium is immobilized within the pores of the electrode and thus removed from the flowing solution.

The saturated electrodes may be regenerated, if desired. Regeneration may be accomplished by dissolving the chromium precipitates residing within the saturated cathode as a concentrate which can be properly disposed of as a concentrated waste or recycled to a chromium consumer. As a result, the electrochemical purifier is regenerated for reuse. Regeneration can be achieved by chemical or electrochemical (or a combination of both) treatments, aimed at dissolving the precipitate. Said treatments may be the passage of an acidic or ligand (complexing agent) solution, or a combination of both, through the precipitate-bearing cathode, or by applying an anodic (positive) potential to the said cathode, so that local electrochemical acidification, and probably also oxidation of the chromium precipitate lead to its dissolution as a chromium solution concentrate. In certain cases, particularly those in which the initial chromium concentration is low and large volumes can be treated before saturation of the electrode, the disposal of the fully loaded electrode as a solid concentrate, which can be recycled for smelting, may be economical so that the regeneration step may be not be necessary.

The present invention will be described in more detail on hand of the following drawings and Examples.

**Figure 1**
schematically represents a flow-through cell, comprising parallel porous carbon electrodes in a common housing, alternately connected as anodes and cathodes.

**Figures 2a to 2d**
schematically represent a cell divided by a diaphragm into anode and cathode compartments, the contaminated feed solution is fed to the cathode compartments only.

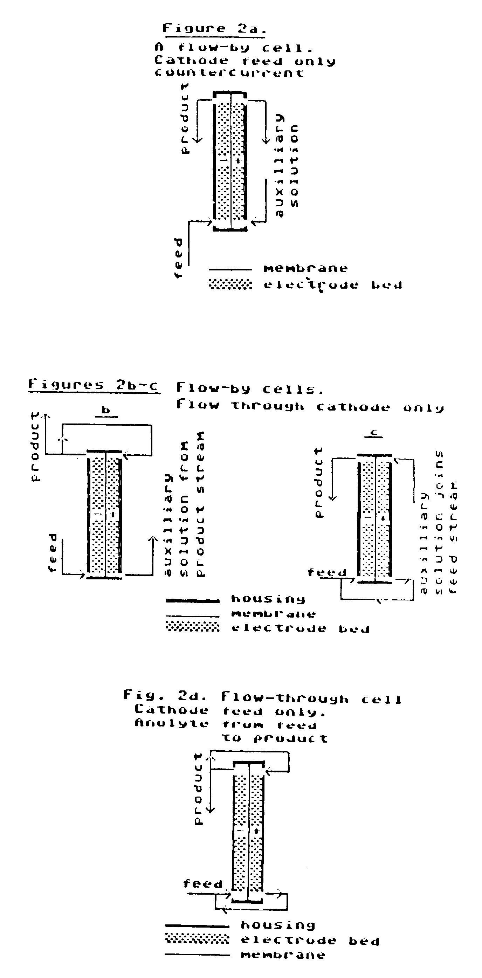

**Figures 3a to 3d**
schematically represent a cell as in Figs. 2a-2d, the solution flowing in series through the cathode and anode, respectively (a,c) and through the anode and cathode compartments, respectively (b,d).

**Figures 4a and 4b**
schematically represent an arrangement comprising two cells, divided by a diaphragm, connecte d in series, through which the solution flows in series, through anode-cathode-cathode-anode compartments.

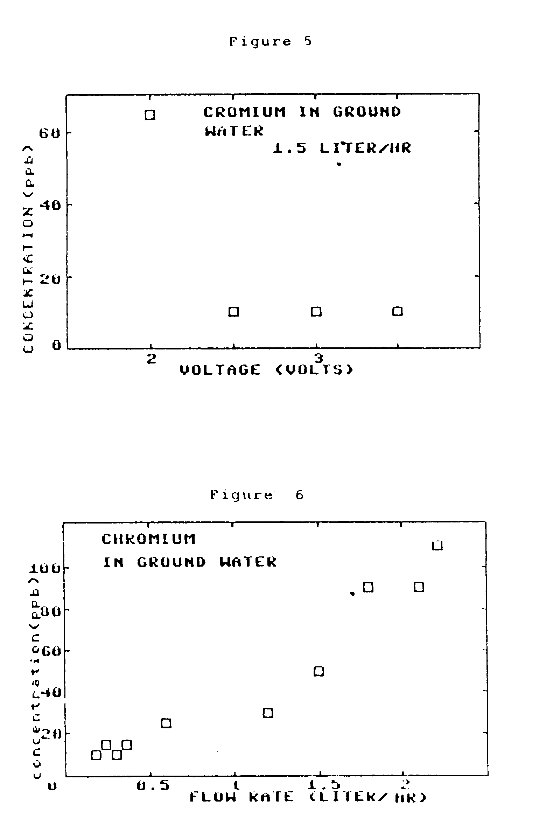

**Figures 5 and 6**
illustrate the reduction in chromium concentration in dependence of voltage Fig. 5) and flow rate (Fig. 6).

The flow through configuration.

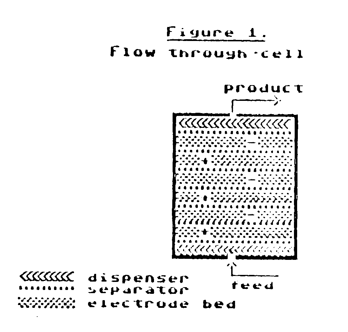

The device shown in Fig. 1 consists of a succession of thin (2-10 mm) anode (1)-cathode (2) pairs, made from carbon or graphite felt, or any other form of porous carbon or graphite, through which the solution flows axially and parallel to the electric current (flow-through mode). The same potential difference is applied to all the electrode pairs. Each pair of electrodes is separated by a perforated spacer insulator which allows free flow of the solution but prevents electric short-circuiting. It is noteworthy that the anode and cathode need not be of equal thickness, rather their thicknesses may be given an optimized ratio according to the process parameters. For instance, the cathode may be thicker than the anode so as to allow for a relatively longer residence time for the chromium reduction, in favour of the competing hydrogen evolution reaction. This device is particularly suitable for treating solutions of low contamination levels (usually less than 500 ppb chromium) and low conductivity. The serial arrangement gives rise to a multistaging effect so that in fact, the unit acts as a column. In order to maintain a homogenous flow rate throughout its cross section, dispensers are installed at the entry and exit of the device as illustrated in the Figure. The dispenser is essentially an inert solid body, having the shape of the cross section of the cell basis (say, a disc if the cell is cylindrical) and having channels machined therein in a manner that the solution entering and exiting the cell is evenly distributed to and collected from the whole cross section of the cell. The solution flows through the alternating cathodes and anodes, electrochemically reducing and precipitating chromium as described above.

The flow-by configuration

The device shown in Figures 2a-2d comprises a pair of elongated anode and cathode made of porous carbon or graphite and separated by an ion selective membrane. Unlike the flow-through device, the solution in this case flows parallel to the separator and perpendicular to the electric current (flow-by mode). Since the membrane does not allow free cross-flow of the solution, it divides the cell into cathode and anode compartments. As in the flow-through cell configuration, the cathode and anode porous electrodes may preferably be of different thickness.

Besides forming a multistaged column like the former flow-through cell, the cell division by the membrane separator leads to several possibilities of solution flow modes. These possibilities are most important for improving the performance of the chromium electroseparator since they allow, as will be shown in the following, separation, and thus better control, of the different electrochemical steps in the separation of chromium ions from aqueous media.

### Feed flow-through cathode only

In Figure 2a the simplest mode of feed flow-through cathode only is shown.The anode compartment has a separate, auxiliary solution which primarily enables ionic conductivity across the cell. Even in this simple configuration there are few modes of flow of the auxiliary solution. Thus, it may be flown cocurrent or countercurrent with respect to the feed solution (cocurrent flow is shown in Figure 2a); it can be flown in a single pass and disposed of or circulated through a reservoir. It may originate as a fraction of the product stream or may join the feed stream after a single pass (Figs. 2b-c respectively). The anode side may pose a problem since it may be contaminated with chromium ions coming from the cathode side by diffusion or electromigration through the membrane separator and this contamination may be carried over to the device exit and contaminate the purified product. It seems that the best mode of flowing the auxiliary solution is a single pass countercurrent mode originating as a side stream from the product stream and ending at the feed stream entering the cathode compartment. This is shown in Figure 2d.

The advantage of the countercurrent is washing chromium contamination and the electrogenerated acidity down to the cathode feed (where acidity is required) and keeping a chromium free solution at the product end of the column. Deriving the anolyte stream from the product flow is economically and enviromentally favourable, since it saves the introduction of excess electrolyte to the system.

This cell construction and flow modes serve best when low or medium chromium concentrations are to be removed down to the purest, Cr-free product stream (say 10 ppm to less than 2 ppb.

### Anode-cathode flow modes

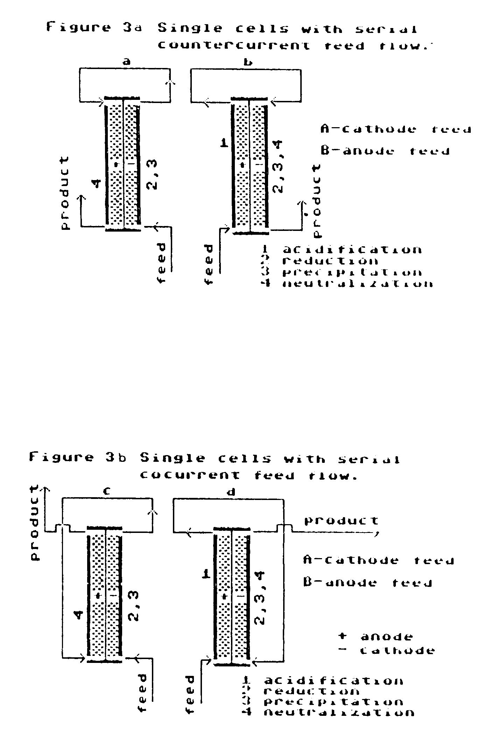

These modes may seem worthless if merely electrodeposition of a metallic ion was considered. However, when several reactions as mentioned above are involved in the removal of chromium, these modes become important. In Figures 3a-b the countercurrent modes of flow through both anode and cathode are described. At the anode feed embodiment in these Figures, the solution is acidified first via water decomposition at the anode, then reduction, precipitation and neutralization occurs at the cathode. Figures 3c-d are a cocurrent version of the cathode-anode serial flow mode of Figures 3a-b. Unlike the contercurrent auxiliary anolyte solution modes of Figures 2b and 2c, the solution at the exit side of the electrochemical columns of Figures 3 is not free of contaminant at both sides of the cell. Therefore, there is a risk of back contamination of the product by chromium ions crossing the membrane separator. Therefore, the serial cathode-anode flow versions are suitable primarily for low chromium concentration solutions.

### The two cell flow modes

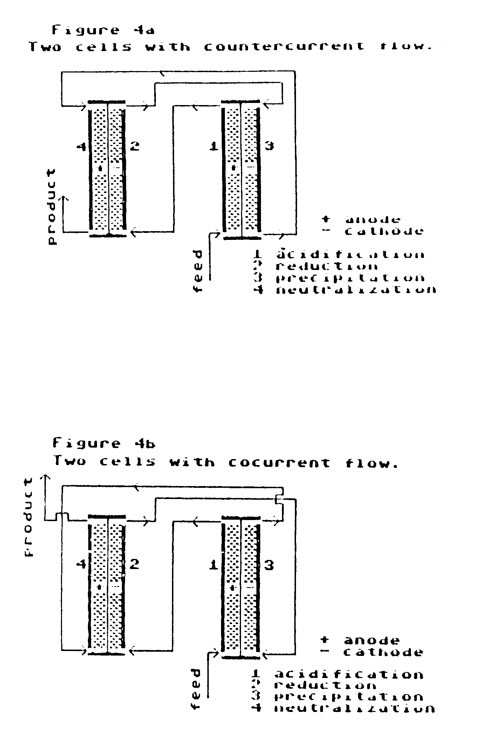

An interesting embodiment is the two cell flow configuration shown in Figures 4a and 4b. In these cells the solution flows first through the anode, then through the cathode as in Figure 3. Provided that the proper potentials are applied, the solution will be acidified to the proper pH at the anode. At the cathode both reduction and precipitation will occur. For the last two processes to occur within the same cathode, the solution flow rate and the electrode potential should be adjusted carefully so that a proper pH gradient is formed along the electrode. Under these conditions reduction will mostly occur upstream whereas precipitation will occur downstream.

The device presented in Figures 4a-4b is composed of two columns designed as those in Figure 3. The solution flows through the electrodes according to the following scheme: Anode I (acification)--Cathode II (reduction)--Cathode I (precipitation)--Anode II (neutralization). By this way the four steps mentioned above are completely separated. The last neutralization step is aimed to the basic solution obtained at the precipitation step, thus allowing re-use of the water or solution without any further treatment. With this device, highly contaminated solutions (chromium concentration >20 ppm) can be treated.

For better control of the electrochemical process any, or all, of the devices mentioned above may be equipped with one or more reference electrodes (such a SCE- Saturated Calomel Electrode) installed at different locations of the device to allow monitoring the electrochemical potentials. The use and structure of reference electrodes are well known in the art and are mentioned herein for sake of the generality of the description.

**EXAMPLES**

Example 1

Ground water, accidentally contaminated by 180-200 ppb chromium as a result of a leak from a chromium plating plant were treated with the device shown in Figure 1 at varying flow rates and voltages. The device was composed of two anode-cathode pairs made of graphite felt, of 5 cm diameter. The results are shown in Figures 5 and 6. It is clear that at the voltage range 2,5-3.5 V (Fig. 5) and flow rates below 1.5 lit/hr (Fig. 6), chromium concentrations below 50 ppb are obtained.

Example 2

A series of solutions having the following composition: 0.001 M sulphuric acid, 0.05 M $Na_2SO_4$ and $CrO_4^{-2}$ at the chromium concentration range of 0.5-11 ppm (the natural pH is 3-3.5), were passed at a flow rate of 1 ml/min through the potentiostatically controlled cathode (-1.6 v vs. SCE) of the device shown in Figure 2. The anode compartment was flushed with the same solution, which did not contain chromium. The electrodes in this case have the following dimensions: length-300 mm, width-10 mm, thickness-3 mm. In all cases chromium concentration was reduced to less than 40 ppb.

Example 3

A synthetic solution of 0.001 M sulphuric acid, 0.05 M $Na_2SO_4$ and 10.6 ppm hexavalent chromium was treated under exactly the same conditions as in the former case. Ten liters of this solution were treated before outlet chromium concentrations larger than 40 ppb were observed. At this point the run was terminated and the cathode was removed from the cell, sectioned and analysed for longitudinal chromium distribution. The results are shown in Figure 7. From this experiment it can be deduced that the elctrode can be loaded to at least 10% of its weight.

Example 4

A synthetic solution having the following composition: 0.05 M $Na_2SO_4$ and 5 ppm hexavalent chromium (the natural pH is 5.2) was treated under the conditions given in Example 2 except that the cathode potential was -1 V vs. SCE. Chromium concentration at the outlet was less than 25 ppb.

Example 5

A synthetic solution with the composition: 0.001 M sulphuric acid, 0.05 M $Na_2SO_4$ and 11.8 ppm hexavalent chromium was treated at the same setup as in Example 2. Chromium removal was achieved by two steps: In the first step chromium was reduced on the cathode at -0.8 V vs.SCE. The solution analysis showed 8 ppm $Cr^{+3}$ and less than 25 ppb $Cr^{+6}$. In the second step, the solution contaning the reduced chromium was passed through the same cathode at -1.6 V vs. SCE. Under these conditions precipitation of the trivalent chromium occurs. The resulting solution had less than 25 ppb total chromium concentration.

Example 6

Ground water, accidentally contaminated by 90 ppm of hexavalent chromium, at pH 7.8, were treated. Removal of chromium was achieved by using the device presented in Figure 2 and applying the following steps:

a) Passing the water through the anode while applying a constant current of 30 mA. A reference solution is passed through the cathode. The resulting solution had a pH of 2.7.

b) The acidified solution was collected and then passed through the cathode. At this step a constant potential of -0.5 V vs. SCE was applied to the cathode in order to allow controlled reduction of the hexavalent chromium.

c) The solution of step (b) was collected, then passed through the cathode to which a constant current of 18 mA was applied. The anode compartment was flushed with a reference solution. At this step chromium was precipitated within the electrode and its resulting concentration in the water was 1 ppm at pH 10.8.

**Claims**

1. A method of purifying wastes containing chromium in both the hexavalent and trivalent states comprising passing the waste to be purified in an electrolytic cell through the pores of a porous carbon electrode connected as the cathode, whereby the hexavalent chromium present is electrolytically reduced and subsequently or simultaneously precipitated as chromium or an insoluble chromium compound within the pores of the porous carbon electrode.

2. The method of claim 1 wherein said electrolytic cell is in the form of a series of electrolytic cells in a common housing, comprising porous carbon electrodes separated by foraminous separators only preventing electrical short-circuiting, while permitting free throughflow of the solution, said electrodes being alternately connected as cathodes and anodes, the solution flowing through said overall normal cell to the series of individual electrode pairs, therefore also parallel to the direction of the current flow.

3. The method of claim 1 wherein said electrolytic cell is a cell divided into an anode and a cathode compartments by a membrane, both cell halves having an elongated form and essentially filled by a porous carbon electrode, the solution to be purified is passed lengthwise normal to the direction of current flow through the cathode, while an auxiliary solution is flown through the electrode in the anode compartment.

4. The method of claim 3 wherein said auxiliary solution in the anode compartment is a side stream taken from the purified solution leaving the cathode compartment and re-united with the feed solution after passing the anode compartment.

5. The method of claim 3 wherein said auxiliary solution is a separate solution recirculated through the anode compartment.

6. The method of claim 3 wherein said auxiliary solution is separately prepared and united with the feed solution after passing the anode compartment.

7. The method of claim 1 wherein said electrolytic cell is divided into an anode and a cathode compartment, the waste to be purified is passed as a preliminary step through an anode compartment, thereby enriching the same in hydrogen ions, and the waste so enriched in hydrogen ions is subsequently passed through a cathode compartment thereby reducing hexavalent chrmomium, and precipitating the chromium as an insoluble compound within the pores of the carbon electrode.

8. The method of claim 1 additionally comprising passing the reduced waste through a further cathode compartment of a higher potential thereby completing the precipitation of the chromium as an insoluble compound.

9. The method of any of the claims 3 to 8, additionally comprising passing the purified waste through an anode compartment, thereby lowering the pH of the same to an environmentally acceptable value.

Figure 1.
Flow through cell

product

⋘⋘⋘⋘ dispenser
·········· separator
░░░░░ electrode bed

feed

Figure 2a.
A flow-by cell.
Cathode feed only
countercurrent

─────  membrane
▒▒▒▒▒  electrode bed

Figures 2b-c  Flow-by cells.
Flow through cathode only

━━━━━  housing
─────  membrane
▒▒▒▒▒  electrode bed

Fig. 2d. Flow-through cell
Cathode feed only.
Anolyte from feed
to product

━━━━━  housing
▒▒▒▒▒  electrode bed
─────  membrane

Figure 3a Single cells with serial
          countercurrent feed flow.

A-cathode feed

B-anode feed

1 acidification
2 reduction
3 precipitation
4 neutralization

Figure 3b Single cells with serial
          cocurrent feed flow.

A-cathode feed

B-anode feed

+ anode
- cathode

1 acidification
2 reduction
3 precipitation
4 neutralization

Figure 4a
Two cells with countercurrent flow.

product

feed

+ anode
− cathode

1 acidification
2 reduction
3 precipitation
4 neutralization

Figure 4b
Two cells with cocurrent flow.

Product

feed

+ anode
− cathode

1 acidification
2 reduction
3 precipitation
4 neutralization

11

Figure 5

Figure 6

European
Patent Office

EUROPEAN SEARCH
REPORT

Application Number

EP 90 31 0106

## DOCUMENTS CONSIDERED TO BE RELEVANT

| Category | Citation of document with indication, where appropriate, of relevant passages | Relevant to claim | CLASSIFICATION OF THE APPLICATION (Int. Cl.5) |
|---|---|---|---|
| X | EP-A-0 267 704 (TENNECO CANADA) <br> * page 2, line 51 - page 3, line 51 * * page 5, lines 13 - 17 * * page 6, line 55 - page 7, line 15 * <br> − − − | 1-3 | C 02 F 1/46 |
| A | FR-A-1 344 004 (POLYMETRON) <br> * the whole document * <br> − − − | 3 | |
| A,D | US-A-3 679 557 (P.G.GILBY) <br> * the whole document * <br> − − − | 1,2 | |
| A,D | US-A-4 256 557 (DAVID M. SOBOROFF) <br> * column 1, lines 60 - 68 * * abstract * <br> − − − − − | 1,2 | |
| | | | **TECHNICAL FIELDS SEARCHED (Int. Cl.5)** <br><br> C 02 F |

The present search report has been drawn up for all claims

| Place of search | Date of completion of search | Examiner |
|---|---|---|
| The Hague | 14 November 90 | GONZALEZ ARIAS M.L. |